# EUROPEAN PATENT APPLICATION

(11) **EP 4 207 038 A1**
(43) Date of publication of application: **05.07.2023**
(21) Application number: 22216934.4
(22) Date of filing: 28.12.2022
(51) Int. Cl.: G06Q 30/0601, G06F 16/906, G06N 3/08

(54) **INFORMATION PROCESSING APPARATUS, INFORMATION PROCESSING METHOD, AND RECORDING MEDIUM**

(30) Priority: 29.12.2021 US 202117564370
(71) Applicant: Rakuten Group, Inc., Setagaya-ku Tokyo 158-0094 (JP)
(72) Inventor: CHEN, Wei-Te, Setagaya-ku, Tokyo 158-0094 (JP); XIA, Yandi, Setagaya-ku, Tokyo 158-0094 (JP); SHINZATO, Keiji, Setagaya-ku, Tokyo 158-0094 (JP)
(74) Representative: Hoffmann Eitle

(57) **Abstract**

Disclosed herein is an information processing apparatus including a processor and a memory. The processor references a list indicative of correspondence between a genre of products in electronic commerce and tags to be attached to the products, thereby determining at least one tag not corresponding to the genre. The processor performs a process of training a machine learning model including at least a classifier that determines an output value of each of the at least one tag related to the products on the basis of an embedded expression in product information on the products, the training process being performed on the basis of a loss function of the at least one output value excluding the output value related to each of the at least one tag not corresponding to the genre of the products.

## Description

### BACKGROUND

The present disclosure relates to an information processing apparatus, an information processing method, and a recording medium.

Japanese Patent Laid-open No. 2020-115287 discloses a technology for attaching annotations to input text information on commercial products. The disclosed technology involves allowing a user to specify whether or not extraction of a character string (tag information) to which to attach the annotation is appropriate in carrying out machine learning based on the result of the specification.

Today, the commercial products targeted for electronic commerce are ever increasing and diversifying, with tremendous kinds of tags to be attached to these products. This requires efficiently performing, for example, a task of classifying the enormous kinds of tags in the process of determining which tag to attach to each product on the basis of texts and images (including videos) explaining the products targeted for electronic commerce.

### SUMMARY

In solving the above problem and according to an aspect of the present disclosure, there is provided an information processing apparatus including a processor and a memory. The processor references a list indicative of correspondence between a genre of products in electronic commerce and tags to be attached to the products, thereby determining at least one tag not corresponding to the genre. The processor further performs a process of training a machine learning model including at least a classifier that determines an output value of each of the at least one tag related to the products on the basis of an embedded expression in product information on the products, the training process being performed on the basis of a loss function of the at least one output value excluding the output value related to each of the at least one tag not corresponding to the genre of the products.

According to another aspect of the present disclosure, there is provided an information processing method including, by a processor, referencing a list indicative of correspondence between a genre of products in electronic commerce and tags to be attached to the products, thereby determining at least one tag not corresponding to the genre, and performing a process of training a machine learning model including at least a classifier that determines an output value of each of the at least one tag related to the products on the basis of an embedded expression in product information on the products, the training process being performed on the basis of a loss function of the at least one output value excluding the output value related to each of the at least one tag not corresponding to the genre of the products.

According to still another aspect of the present disclosure, there is provided a recording medium that is computer-readable and non-temporary, the recording medium storing a program for a processor, including referencing a list indicative of correspondence between a genre of products in electronic commerce and tags to be attached to the products, thereby determining at least one tag not corresponding to the genre, and performing a process of training a machine learning model including at least a classifier that determines an output value of each of the at least one tag related to the products on the basis of an embedded expression in product information on the products, the training process being performed on the basis of a loss function of the at least one output value excluding the output value related to each of the at least one tag not corresponding to the genre of the products.

### BRIEF DESCRIPTION OF THE DRAWINGS

FIG. 1 is a block diagram depicting an exemplary configuration of an information processing apparatus embodying the present disclosure;
FIG. 2 is a functional block diagram depicting an example of the information processing apparatus embodying the present disclosure;
FIG. 3 is an explanatory diagram depicting exemplary contents of a correspondence list for use with the information processing apparatus embodying the present disclosure;
FIG. 4 is a functional block diagram related to another example of the information processing apparatus embodying the present disclosure; and
FIG. 5 is a flowchart depicting an operation example of the information processing apparatus embodying the present disclosure.

### DETAILED DESCRIPTION OF THE PREFERRED EMBODIMENT

A preferred embodiment of the present disclosure is described below with reference to the accompanying drawings. In the description that follows, the wording "embedded expression" refers to tensor information (sets of numerical values) corresponding to the input data such as words and images.

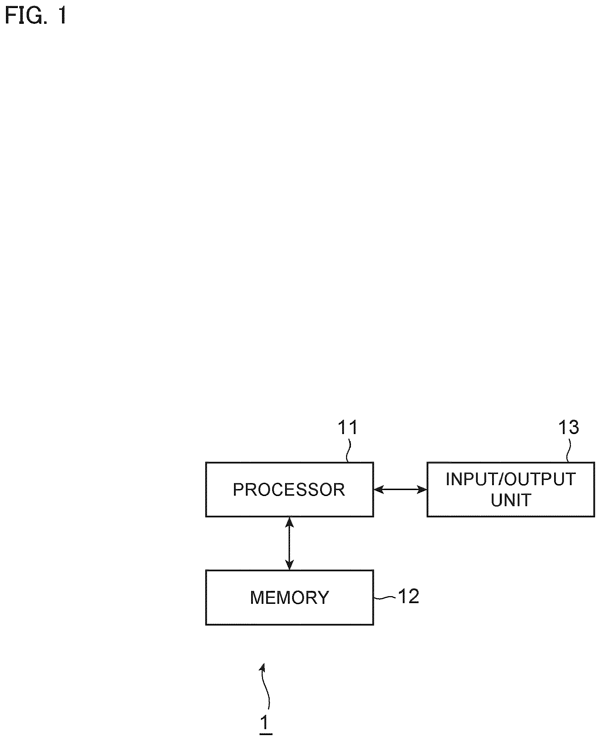

An information processing apparatus 1 embodying the present disclosure is configured to include a processor 11, a memory 12, and an input/output unit 13, as depicted in FIG. 1.

The processor 11 includes at least one program-controlled device such as a central processing unit (CPU). The processor 11 may alternatively include a graphic processing unit (GPU), some other processing unit, multiple CPUs, or a combination of a CPU and a GPU. The processor 11 operates according to programs stored in the memory 12. In the present embodiment, the processor 11 performs a process of determining a tag for each product targeted for electronic commerce. That is, by referencing a list indicative of the correspondence between genre of products for electronic commerce on one hand and the tag to be attached to each of the products on the other hand, the processor 11 determines at least one tag not corresponding to the genre of a given product. Also, the processor 11 carries out a process of training a machine learning model including at least a classifier that determines an output value for each of at least one tag related to the product in question on the basis of a predetermined embedded expression related to product information on the product of interest. The processor 11 performs the training process on the basis of a loss function of at least one output value excluding the output value related to each of at least one tag not corresponding to the genre of the product in question. The operation of the processor 11 will be discussed later in detail.

The memory 12 is a storage element, a disk device, or the like, for example. The memory 12 stores a program to be executed by the processor 11. This program may be stored on a computer-readable, non-temporary storage medium when offered, the program being copied therefrom to the memory 12.

The input/output unit 13 includes a universal serial bus (USB) interface, etc., for example. Connected with a keyboard and a mouse, for example, the input/output unit 13 receives information such as texts input by a user. The input/output unit 13 may further include a network interface, for example, and may receive diverse kinds of information such as text information, image information, and audio information constituting product information, from other information processing apparatuses. The input/output unit 13 may also be connected with a display unit, for example, and may display information, according to instructions input from the processor 11, on the display unit, for example.

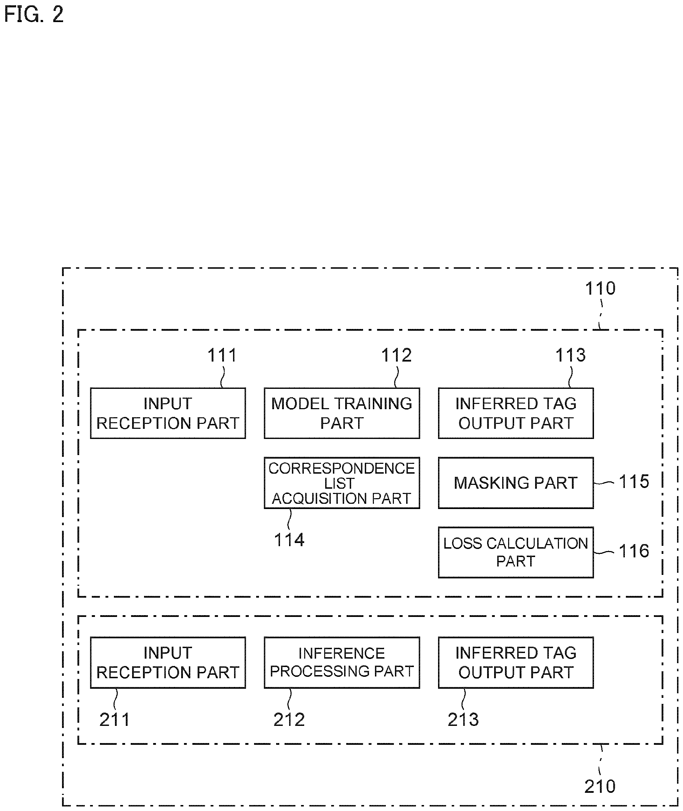

The operation of the processor 11 is explained next. By executing the program stored in the memory 12, the processor 11 functionally implements a configuration that includes a learning processing part 110 and an inference processing part 210, as depicted in FIG. 2.

Here, the learning processing part 110 includes an input reception part 111, a model training part 112, an inferred tag output part 113, a correspondence list acquisition part 114, a masking part 115, and a loss calculation part 116.

The inference processing part 210 includes an input reception part 211, an inference processing part 212, and an inferred tag output part 213.

The input reception part 111 of the learning processing part 110 receives the following kinds of information at least: information on the genres of products in electronic commerce, information on the products (referred to as product information hereunder), and information identifying at least one tag as a correct answer (referred to as correct answer information). Here, the product information may be text information such as product names or product descriptions, images of products, videos describing products, or video and audio information audibly describing products.

The model training part 112 performs a machine training process on a machine learning model targeted for the machine learning process. In an example with the present embodiment, the machine learning model to be machine-trained by the model training part 112 is assumed to use a transformer network. Specifically, the machine learning model is based on "Bidirectional Encoder Representations from Transformers; J. Devlin, et al., BERT: Pre-training of Deep Bidirectional Transformers for Language Understanding, arXiv:1810.04805v2)."

Here, BERT is assumed to have previously undergone predetermined machine training and be capable of outputting an embedded expression of the product of interest on the basis of the product information.

Still, the machine learning model for use with the information processing apparatus 1 embodying the present embodiment is not limited to BERT. The machine learning model to be used by the information processing apparatus 1 of the present embodiment may be some other model as long as it has been machine-trained to be capable of outputting embedded expressions of product information and includes at least one classifier that determines a predetermined output value for each of at least one tag of the product on the basis of the embedded expression (the output value is the probability of matching of each tag with the product information).

For example, the machine learning model may include ELECTRA (https://arxiv.org/abs/2003.10555) or ViT (Vision Transformer: https://openreview.net/forum?id=YicbFdNTTy).

The model training part 112 uses the product information received by the input reception part 111, as the input to the machine learning model, to obtain the embedded expression of the product information as one output from the machine learning model, and outputs the embedded expression to the inferred tag output part 113. In a case where the machine learning model is BERT, a classification token (CLS token) may be used as the embedded expression. Still, this is only an example, and the embedded expression here may be an average of the embedded expressions of tokens (words) as long as the embedded expression suitably expresses the input product information. Also, based on the information on the loss function output from the loss calculation part 116, to be discussed later, the model training part 112 machine-trains the machine learning model in such a manner that the model inputs product information and outputs the probability of matching of each tag with the input product information. The machine training process is carried out, for example, by updating the parameter information included in the machine learning model, through back propagation.

On the basis of the embedded expression of the product information output from the model training part 112, the inferred tag output part 113 outputs the probability of matching of each preset tag with the input product information (i.e., probability in determining whether to attach each tag) as the output value. Specifically, the inferred tag output part 113 calculates the matching probability of the tags close to the embedded expression generated by the machine learning model, by use of a neural network included in the machine learning model and an activation function such as a sigmoid function. In a case where the machine learning model includes a feed-forward network as the classifier, the calculation is performed using that feed-forward network.

In a case where the machine learning model includes a fully-connected layer instead of the feed-forward network, it is sufficient if the inferred tag output part 113 inputs the embedded expression of the product information, the embedded expression being output from the model training part 112, to the fully-connected layer to obtain the matching probability regarding the input product information (the matching probability is the probability in determining whether to attach teach tag). In this example, the inferred tag output part 113 can determine the output value (matching probability) without recourse to the activation function.

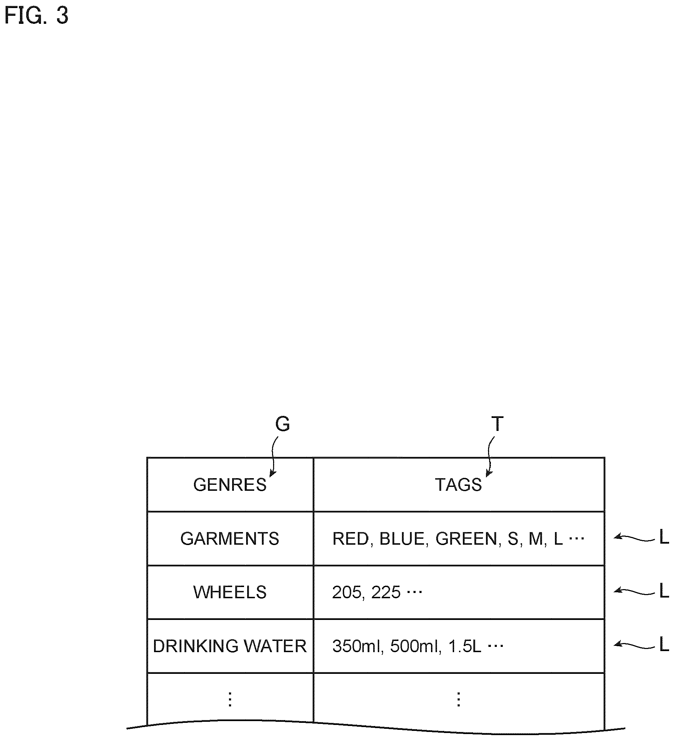

The correspondence list acquisition part 114 acquires a correspondence list indicative of the correspondence between the genres of products in electronic commerce on one hand and the tags to be attached to the products on the other hand. In an example with the present embodiment, a correspondence list (L) that associates product genres (G) with tags (T) to be attached thereto is prepared in advance, as depicted in FIG. 3. The correspondence list (L) is stored in the memory 12. In this example, in association with the product genre "garments," the correspondence list records tags made up of information such as colors including red, blue, and green, or sizes including small (S), medium (M), and large (L). Mismatching tags not relevant to the product genre "garments" include, for example, television screen sizes such as 32 inches, 40 inches, and 43 inches, or drinking water bottle sizes such as 350 milliliters (mL), 500 mL, and 1.5 liters (L).

In an example using the above-described correspondence list, the correspondence list acquisition part 114 acquires, from the correspondence list, the information on the tags associated with the information on the product genre received by the input reception part 111.

Given the matching probability of each tag calculated by the inferred tag output part 113, the masking part 115 outputs, to the loss calculation part 116, information on the matching probabilities excluding the matching probabilities related to the tags not identified by the information acquired using the correspondence list acquisition part 114. That is, the masking part 115 sets to "0" the output values (matching probability of each tag) from the inferred tag output part 113 with respect to the tags not corresponding to the input product genre (i.e., mismatching tags; "0" is the value of the result of applying a large negative value to the activation function). The masking part 115 thus selectively outputs, to the loss calculation part 116, the output values regarding at least one tag not included in the mismatching tags (the output values are generally larger than "0"), the output values excluding output values related to the mismatching tags.

The loss calculation part 116 applies a predetermined activation function (e.g., a nonlinear function such as a sigmoid function or a soft-max function) to the output value for each tag output from the masking part 115. The loss calculation part 116 then calculates the loss function by use of both the value obtained by application of the activation function and the correct-answer information received by the input reception part 111. Here, the loss function calculated by the loss calculation part 116 may be an error sum of squares or a cross-entropy error, and an appropriate loss function is adopted by setting tasks. The value of the loss function calculated by the loss calculation part 116 is submitted to the machine training process performed by the model training part 112 on the machine learning model.

The model training part 112 proceeds to fine-tune the machine learning model by use of the value of the loss function.

The processor 11 also acts as the inference processing part 210 under instructions from the user. The input reception part 211 in the inference processing part 210 receives input of product information and outputs the input product information to the inference processing part 212.

The inference processing part 212 inputs the product information received by the input reception part 211 to the machine learning model machine-trained by the learning processing part 110. The inference processing part 212 acquires information on the probability of matching of each tag with the product information, the matching probability being output from the machine learning model.

In a case where the machine learning model includes the feed-forward network, the inferred tag output part 213 identifies the tag related to the input product information by use of the information on the matching probability of each tag, the information being obtained by the inference processing part 212 through application of the output of the feed-forward network to the activation function, the inferred tag output part 213 further outputting information identifying the tag in question. In one example, the inferred tag output part 213 references the information on the matching probability of each tag, the information being obtained by the inference processing part 212, and outputs the information identifying the tag of which the matching probability exceeds a predetermined value. Here, one or multiple tags may be identified using the output information. In a case where the matching probabilities of all tags fall below the predetermined value, the number of identified tags may be set to zero.

As discussed above, the inference processing part 212 may obtain the matching probability of each tag (i.e., probability in determining whether to attach each tag) by use of the fully-connected layer instead of the feed-forward network.

### Operation

The information processing apparatus 1 of the present embodiment is basically configured as described above and operates as explained in an example below. In the ensuing example, it is assumed that the machine learning model used by the information processing apparatus 1 is BERT.

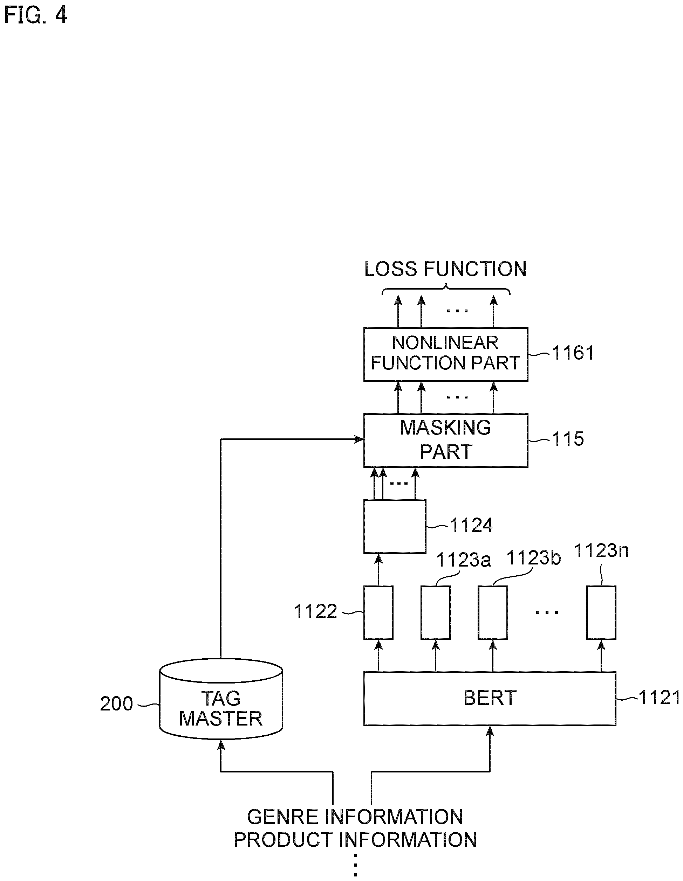

In this example, the information processing apparatus 1 functionally includes the model training part 112, the masking part 115, a nonlinear function part 1161, and a tag master 200 serving as the correspondence list, as depicted in FIG. 4. The model training part 112 includes a machine learning model 1121, a CLS token output 1122 output from the machine learning model 1121, tokens 1123a, 1123b, etc., related to words, and a network part 1124.

The user first performs the machine training process (fine-tuning) on the machine learning model of the information processing apparatus 1. Specifically, the user inputs machine training data to the information processing apparatus 1, the data being a combination of genre information on multiple products in electronic commerce, product information on the products, and corresponding correct-answer information.

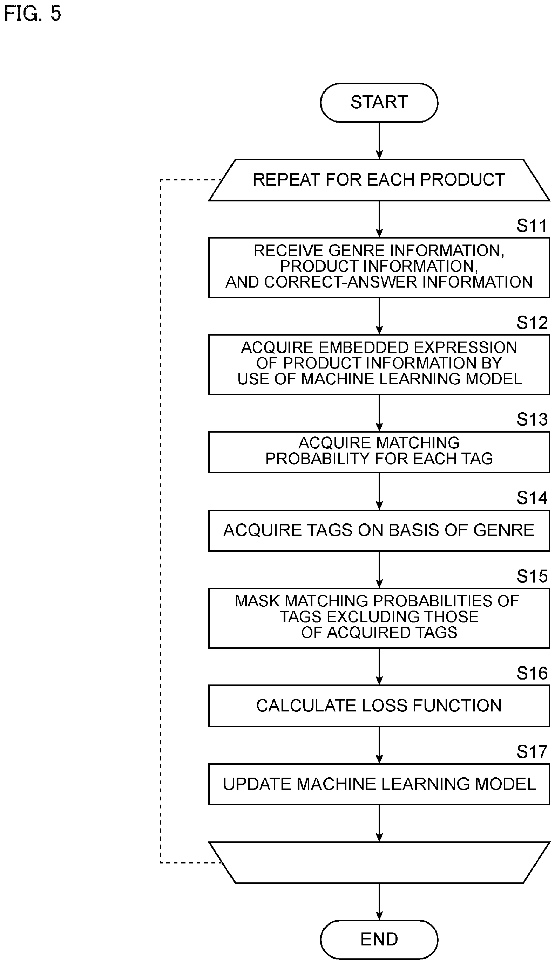

As depicted in FIG. 5, the processor 11 in the information processing apparatus 1 sequentially receives, for each product, the genre information on the product, the product information, and corresponding correct-answer information (step S11). For example, the processor 11 inputs the received product information to BERT that is the machine learning model 1121, and acquires the CLS token 1122 output from BERT, as the embedded expression in the product information (step S12).

The processor 11 inputs the embedded expression obtained in step S12 to the network part 1124 that is a feed-forward network and obtains an output value from the network part 1124 (step S13), the output value being a vector of the probability of matching of each preset tag with the input product information (i.e., probability in determining whether to attach each tag).

Meanwhile, the processor 11 acquires the information on the tags previously enumerated to be attached to the products in the genre represented by the genre information from among the received information (step S14). In an example with the present embodiment, as described earlier, the processor 11 references the tag master 200 serving as the correspondence list that retains the genres of products in association with the tags to be attached to the products, to acquire the information on the tags corresponding to the received genre information.

Given components of the vector obtained in step S13, the processor 11 causes the masking part 115 to remove through masking (step S15) the matching probabilities of the unmatching tags other than the tags represented by the information acquired in step S14. It is to be noted that, if the value of a component is "0," the processor 11 outputs the value "0" unchanged for the component. The processor 11 causes the nonlinear function part 1161 to calculate (step S16) the value of the loss function such as an error sum of squares or a cross-entropy error between the matching probability of each tag on one hand, and the component "1" corresponding to the tag with the correct-answer information input in step S11 and the component "0" corresponding to the tag not included in the correct-answer information on the other hand. During the calculation, the processor 11 ignores the matching probabilities of the masked tags (i.e., does not calculate their differences from the correct answer and does not accumulate the results).

The processor 11 further performs the machine training process (fine-tuning) on the machine learning model on the basis of the value of the loss function, thereby updating each of the parameters in the machine learning model (step S17).

Thereafter, the processor 11 repeats steps S11 through S17 on each product included in the input data. Upon completing the processing on all products in the input data, the processor 11 terminates the machine training process.

### Example of carrying out batch processing

Described above are the examples in which the machine training process is repeated on each product. Alternatively, what is generally called batch processing in which an update of the parameters of the machine learning model is performed on the basis of the data regarding multiple products (i.e., in a batch) may be carried out.

In this case, the processor 11 obtains in step S13 a tensor having the vectors arranged corresponding to each of the products included in the batch. In step S14, the processor 11 obtains the tag information corresponding to the genre of the products included in the batch. In step S15, given the vectors corresponding to the products in the batch from among the vectors included in the tensor obtained in step S13, the processor 11 performs masking of the vector components corresponding to the unmatching tags not included in the tag information obtained in step S14 corresponding to the genre of the products in question, the masked components being set to "0." Thereafter, the loss function can be calculated using well-known methods of batch processing.

### Creation of the correspondence list

The correspondence list for use by the processor 11 in the above-described examples may be created on the basis of the relation between the tags attached previously to the products targeted for electronic commerce on one hand and the genres of these products on the other hand.

For example, the processor 11 creates the correspondence list by use of data of records associating the information on the genres of the products targeted for electronic commerce in the past with the information on the tags attached to the products. In an example, on the basis of such data regarding each genre of products, the processor 11 detects the information on the tags that have been attached more times than a predetermined threshold count to the products in the genre of interest. The processor 11 then associates the detected tag information with the genre of the products and causes the associated information to be included in the correspondence list.

### Other examples of masking

In the foregoing explanation, the processor 11 is described as preparing the correspondence list in which the genres of products are associated with the tags to be attached to the products, in order to obtain the information on the tags to be masked (i.e., unmatching tag information). However, the use of the correspondence list is not limitative of how the present embodiment is embodied.

For example, the processor 11 may cluster previously enumerated tag candidates into each product genre for classification, thereby creating a list associating the genres of products with the tags to be attached to the products.

In this example, the processor 11 obtains a vector expression for each of the tags. The vector expression may be set as follows. First, the permutation of product genres is set as G1, G2, etc. For each of the tags attached to the products in the past, the number of times the tag of interest has been attached to the products in a genre Gi is taken as an i-th component value corresponding to the genre Gi to thereby obtain the vector expression. For example, the permutations of genres is set as "garments," "shoes," "bags," etc. Given a vector expression Vj of a tag Tj (j = 1, 2, ...), the number of times the tag Tj has been attached to the products in the genre "garments" is set as T1j, the number of times the tag Tj has been attached to the genre "shoes" is set as T2j, and so on. This provides the vector expression Vj = (T1j, T2j, T3j, ...).

Given the vector expression obtained for each tag, the processor 11 divides the expressions into multiple clusters through a predetermined clustering process such as the k-means method. The processor 11 then associates the product genre information with each of the clusters. The associating process may be carried out by setting the genre information for each cluster through manual reference to the tags belonging to the clusters. Also, the processor 11 may have the vector expressions regarding the genre information (in the above example, the vector expressions of the genre Gi may be given by setting the i-th component to "1" and the other components to "0" in a one-hot vector) included as a target for the clustering process, and submit the expressions to the clustering process together with the vector expressions of the tags. In this case, each cluster is associated with the information on the genres included in the cluster of interest. If the genre information is not included in a cluster, that cluster may be associated with the genre information having the vector expression closest to the center of the cluster in question.

The processor 11 associates the information on the tags found to belong to each cluster with the information on the genre related to the cluster in question. In this manner, the tags corresponding to the genre information are established. The processor 11 may use the correspondence information on the tags corresponding to the genre information obtained in the above manner in place of the correspondence list prepared in advance, or record and utilize the correspondence information acquired in this manner as the correspondence list.

### Tag inference operation

Using the machine learning model machine-trained in the above-described processes, the information processing apparatus 1 of the present embodiment selects the tag to be attached to a given product and outputs the information identifying the selected tag. The selecting process is carried out as described below.

The user inputs, to the information processing apparatus 1, the product information on the product targeted for attachment of the tag. As mentioned above, the product information may be text information such as the name or the description of the product, an image of the product, a video describing the product, or video/audio information audibly describing the product. The input information is to be of the same type (text, image, video, audio, or combination thereof) as that input at the time of the machine learning process.

The processor 11 of the information processing apparatus 1 uses the input product information as the input to the above machine learning model, and obtains an embedded expression of the product information as one output of the machine learning model. In a specific case where the above machine learning model includes BERT, CLS tokens (classification tokens) are used as the embedded expression.

The processor 11 inputs the embedded expression thus obtained to the feed-forward network constituting the above machine learning model, and obtains, as the output value of the model, a vector of matching probabilities (probability in determining whether to attach each tag) regarding the input product information for each preset tag.

In a case where the machine learning model includes the fully-connected layer instead of the feed-forward network, the processor 11 may input the acquired embedded expression to the fully-connected layer and obtain, as its output value, a vector of matching probabilities (probability in determining whether to attach each tag) regarding the input product information for each preset tag. At this point, the processor 11 converts, through the fully-connected layer, the number of dimensions of the embedded expression into the number of dimensions commensurate with the number of tags. In the case where the fully-connected layer is used instead of the feed-forward network, the processor 11 determines the output value (matching probability) without application of the activation function.

The processor 11 then references the information on the matching probability for each tag of interest, and outputs information identifying the tag of which the matching probability exceeds a predetermined value, as the information on the tag to be attached. The information to be output here may identify one or multiple tags.

Further, when a tag which is specified by information output as information of a tag to be attached, is attached to a product, the processor 11 may receive the information, and include the information in the correspondence list while associating the attached tag and a genre of the product, to update the correspondence list. Thereby, the correspondence list is updated every time a tag to be attached to any of the products is determined.

It should be understood by those skilled in the art that various modifications, combinations, subcombinations and alterations may occur depending on design requirements and other factors insofar as they are within the scope of the appended claims or the equivalents thereof.

## Claims

1. An information processing apparatus comprising:
a processor; and
a memory,
wherein the processor references a list indicative of correspondence between a genre of products in electronic commerce and tags to be attached to the products, thereby determining at least one tag not corresponding to the genre, and
the processor performs a process of training a machine learning model including at least a classifier that determines an output value of each of the at least one tag related to the products on a basis of an embedded expression in product information on the products, the training process being performed on a basis of a loss function of the at least one output value excluding the output value related to each of the at least one tag not corresponding to the genre of the products.

2. The information processing apparatus according to claim 1, wherein the product information is text information.

3. The information processing apparatus according to claim 1, wherein the list is created on a basis of a relation between the tags attached previously to the products and the genre of the products.

4. The information processing apparatus according to claim 1, wherein the list is updated every time a tag to be attached to any of the products is determined.

5. The information processing apparatus according to claim 1, wherein the processor creates the list by clustering previously enumerated tag candidates into each product genre for classification.

6. An information processing method comprising:
by a processor,
referencing a list indicative of correspondence between a genre of products in electronic commerce and tags to be attached to the products, thereby determining at least one tag not corresponding to the genre; and
performing a process of training a machine learning model including at least a classifier that determines an output value of each of the at least one tag related to the products on a basis of an embedded expression in product information on the products, the training process being performed on a basis of a loss function of the at least one output value excluding the output value related to each of the at least one tag not corresponding to the genre of the products.

7. A recording medium that is computer-readable and non-temporary, the recording medium storing a program for a processor, comprising:
referencing a list indicative of correspondence between a genre of products in electronic commerce and tags to be attached to the products, thereby determining at least one tag not corresponding to the genre; and
performing a process of training a machine learning model including at least a classifier that determines an output value of each of the at least one tag related to the products on a basis of an embedded expression in product information on the products, the training process being performed on a basis of a loss function of the at least one output value excluding the output value related to each of the at least one tag not corresponding to the genre of the products.
